# EUROPEAN PATENT SPECIFICATION

(11) **EP 1 282 098 B1**
(45) Date of publication and mention of the grant of the patent: **03.08.2005**
(21) Application number: 01202960.9
(22) Date of filing: 03.08.2001
(51) Int. Cl.: G09F 3/20

(54) **Label for plants, and system and method for printing information on plastic or resin labels for plants**
Etikett für Pflanzen, und System und Verfahren zum Bedrucken von Kunststoff- bzw. Harzfilmetiketten für Pflanzen
Etiquette pour plantes, et système et procédé d'impression sur étiquettes en plastique ou résine pour plantes

(43) Date of publication of application: 05.02.2003
(73) Proprietor: Brandsoft A/S, 7400 Herning (DK)
(72) Inventor: Paskesen, Kurt Baunsgaard, 7330 Brande (DK); Hansen, Frank Kragelund, 8600 Silkeborg (DK)
(74) Representative: Elmeros, Claus

(56) References cited:
- EP-A- 0 552 656
- EP-A- 0 623 855
- EP-A- 0 996 106
- PATENT ABSTRACTS OF JAPAN vol. 2000, no. 05, 14 September 2000 (2000-09-14) & JP 2000 041495 A (EE R C KK), 15 February 2000 (2000-02-15)
- PATENT ABSTRACTS OF JAPAN vol. 2000, no. 22, 9 March 2001 (2001-03-09) & JP 2001 120071 A (EE R C KK), 8 May 2001 (2001-05-08)

## Description

### Background of the invention

The present invention relates to a label for plants according to the preamble of claim 1, system and method for printing information on plastic or resin made labels for plants according to the preamble of claim 8 and 11, respectively.

The labels for plants available on the marked are usually manufactured in either rigid cardboard or plastic material.

The cardboard labels have the significant disadvantage of being less resistant to outdoor weather in general.

The printing on the label will quickly fade away due to the sunlight and the rain will dissolve the cardboard quite fast. For this reason cardboard labels are only used where the information on the label is not interesting after the planting out of the plant.

The plastic labels are usually made in a styrene material that has a smooth and impervious surface. The plastic labels have a rather rigid structure depending on the thickness of the material.

The printing on the label will fade away due to the sunlight or be removed by the continuous pounding against the plant or other objects. The removing of the printing is accelerated by the nature of the surface on which the printing is applied.

The creation of information on the label involves a number of steps that may include an initial step of printing text information on labels where the labels usually come in sheets including numerous labels. Hereafter a separately printed image may be glued on the labels to enhance the level of information to a purchaser of plants. Finally, a bar code and a price may as a separate printed part be glued on the labels.

The printing is usually performed with a printer such as a laser printer connected to a standard computer. However, the plastic labels have a significant disadvantage since the material handles high temperatures poorly. The material starts to melt due to the high temperature in connection with the fixation of the printing in the printer which frequently effects a breakdown of the printer. The temperature characteristics of the material also limit the amount of information that can be printed on a label. For example, is it often not possible to print images or barcodes.

The printing on the labels may also be performed with the use of offset, matrix or thermal printing. However, the printing costs will be high per label unless very large series of labels are printed.

Prior art document EP 0 996 106 A, discloses a method of printing label for plant, using laser printers.

An object of the invention is to create a label for plants that has improved and long lasting printing characteristics irrespective of weather conditions.

A further object is the creation of a system where smaller series of labels may be printed in a cost efficient manner.

### Summary of the invention

The invention relates to a label for plants where the label has a surface including a microporous structure. The invention is defined by the claims.

Hereby, it is possible to produce a label for plants which has improved and long lasting printing characteristics irrespective of weather conditions since the printing penetrates the surface and into the pores of the material where it is protected by against weather conditions. Further, because of the penetration into the surface, the printing is less endangered of being illegible due to cracks in the surface or in the printed matter.

Even further, no coating or aftertreatment of the label is necessary to protect the printed matter.

It should be emphasised that with the term "label for plants" is meant a material affixed to a plant or placed in proximity of a plant to indicate different information about the plant.

It should be emphasised that with the term "plant" is meant any member of the vegetable group of living organisms including flowers and trees. The use of the invention is especially in connection with plants in or from nurseries and similar places.

The invention is especially advantageous in connection with plants having a longer growth period before being harvested, removed or before they die. An example is trees such as Christmas trees where the growth period may be several years and where it is very important to keep track of the history of the plant, such as age, specie and supplier of the plant.

The label material is preferably a biologically inert material e.g. a material that will not affect the plant growth or health.

In an aspect of the invention, said surface comprises a thermoplastic polymer with a softening temperature between 50 and 200 degrees Celsius and preferably above 65 degrees Celsius. Hereby, advantageous features have been achieved in relation to the temperature in general and especially during printing since the temperature of a printer may be up to 300 degrees Celsius on the printer drum. The polymer material will achieve a lower temperature than 200 degrees Celsius because of the movement of the material where the temperature is defined by the speed of the material in the printer.

In another aspect, said label comprises a polyolefin material having a surface with a microporous structure, whereby it is possible to create labels for plants with advantageous characteristics. A characteristic of a polyolefin material is its less rigid nature which makes it easier and safer for the workers to place the present labels on the plants. Especially, since the edges on the labels are not sharp as the known ones, thus will also minimize damage to the plants in connection with the placing of labels.

The less rigid nature of the present labels for plants also has the advantage of being soundless where the known labels make noise when they are moved by the wind. In an area where many plants e.g. thousands of plants are placed together the noise level may be quite high on a windy day, which among other things lowers the quality of the working environment.

A label for plants in a polyolefin material is very temperature resistant to both high and low temperatures which ensures that the printing will not be damaged due to changes in temperature. This is especially advantageous since the labels for plants will endure significant temperature fluctuations from the high temperatures during the printing process to low temperatures during winter conditions after the placing on the plant.

Further, the polyolefin material is inert to electrostatic charging which usually will occur during the printing process and will often be problem with normal plastic materials. The electrostatic charging will inflict on the quality of the layers of colour and especially the homogeneity of the layer thickness, e.g. cause spots with only little printing material. Often the thickness is directly connected to the durability of the printing especially in outdoor applications or extreme situations e.g. damp or moist, cold or warm environments and therefor it is essential to have a certain minimum thickness of the layer of print.

In a third aspect of the invention, fibres of said material are substantially directed in one direction and preferably in a longitudinal direction. Hereby it is possible to create sheets of labels which are easy to separate after the printing due to the less strength of the material in a longitudinal direction. Further, the strength ensures that the label is not easily damaged after the fixation to a peduncle of a plant since forces applied to the label e.g. by nature especially will be in the longitudinal direction.

In a fourth aspect of the invention, said surface includes a text area, an image area and an identification code and/or price area. Hereby, it is possible to print the necessary information on the label in one process without the use of separate elements such as images glued to label in a subsequent process.

In a fifth aspect of the invention, at least one side comprising a porous surface is coated on a further material with a more rigid structure than said surface. Hereby it is possible to create labels with the above-mentioned advantages and a rigid structure.

The invention further relates to a system in which said labels comprise a least one surface with a porous structure and printing on said surface is performed as part of a single process. Hereby it is possible to create a system which involves fewer components and work processes than normally.

In an aspect of the invention, said label comprises a polyolefin material and said printer is a laser printer and preferably a colour or an LED printer. Hereby it is possible to perform the printing process without any material melting problems causing the printer to breakdown. Further, the ability of the polyolefin material to absorb the printing and heat allows a faster printing process and thus a better printing result than with prior used materials.

The label may totally be made in polyolefin material which allows printing on both sides of the label. Further, water or moist cannot penetrate the solid material and peeling is thus not possible.

The invention further relates to a method where said different printing steps are performed as part of a single process. Hereby it is possible to enhance the quality of the printing as well as accelerate the process of printing.

In an even further aspect of the invention, said text, images and identification codes and/or prices are loaded from a database with the use of a data connection such as an Internet connection. Hereby it is possible to store and retrieve information from a central database containing significant amounts of data which allows an accelerated process both in retrieving and printing of information on labels.

### The figures

The invention will be described in the following with reference to the figures, in which
- fig. 1: illustrates a normal place of use for the invention,
- figs. 2a-d: illustrate different embodiments of the invention,
- fig. 3: illustrates a sheet of labels,
- fig. 4: illustrates a label in a use position,
- fig. 5: illustrates a system for making of labels,
- fig. 6: illustrates a stake label as a second embodiment of the invention, and
- fig. 7a and 7b: illustrate the use a stake label in connection with a plant.

### Detailed description

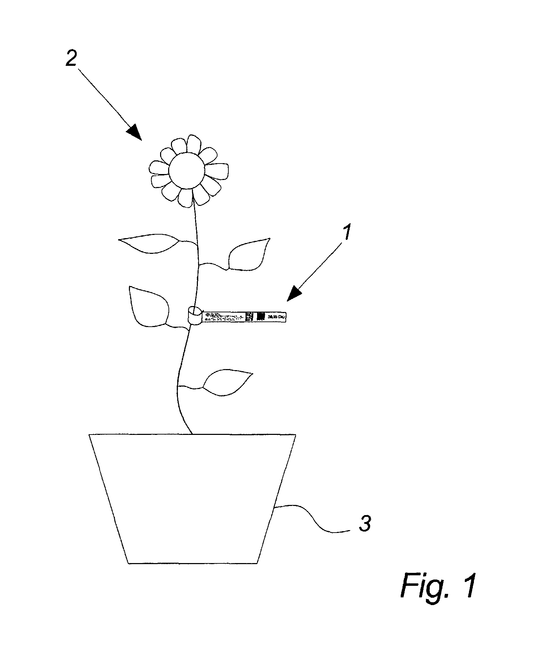

Fig. 1 illustrates a normal place of use for a label (1) according to the invention. The label (1) is fixed around a peduncle of a plant (2) in a loose but long-lasting manner. One side of the label (1) discloses different information regarding the plant it is fixed to.

The label (1) is partially or totally constructed in a plastic or resin material having a microporous surface. An example of a suitable material in connection with the invention is Teslin (Registered Trademark of PPG Industries, Inc). The characteristics of Teslin is further described in European Patent no. 0 289 859.

The microporous surface may have pores with an average diameter range between 0.01 to 1 micrometer and preferably between 0.01 and 0.5 micrometer.

Preferably, the material with the microporous surface has a thickness between 200 and 300 micrometer to ensure high printing quality.

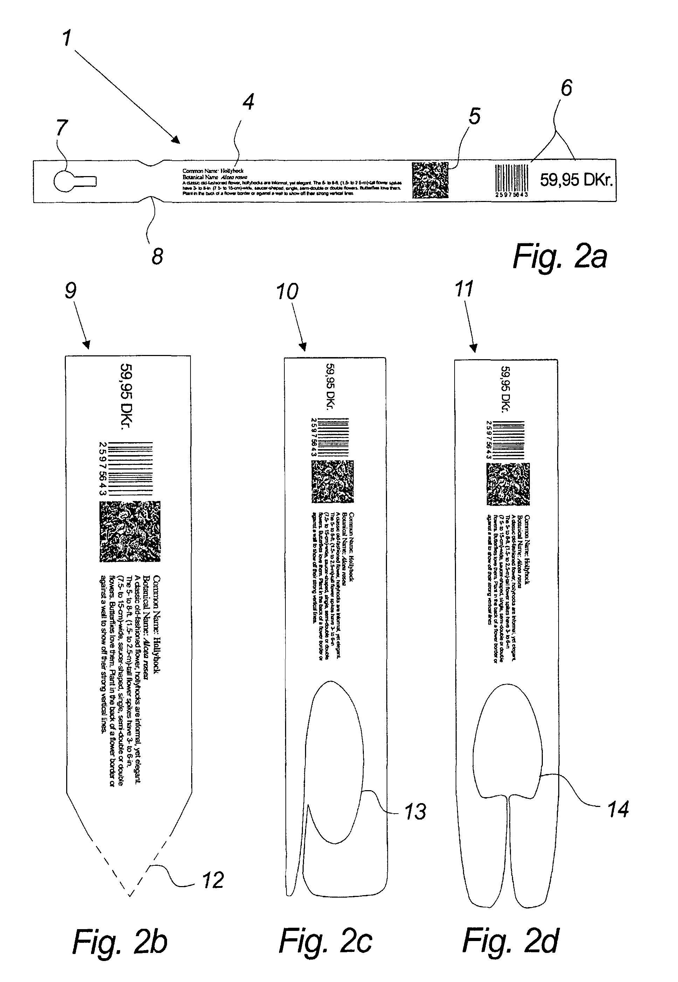

Fig. 2a illustrates a first embodiment of a label (1) for planets (2) according to the invention. The label (1) comprises a section with a number of areas for information printing such as a text area (4), an image area (5) and an identification and price area (6) where the identification may be a bar code.

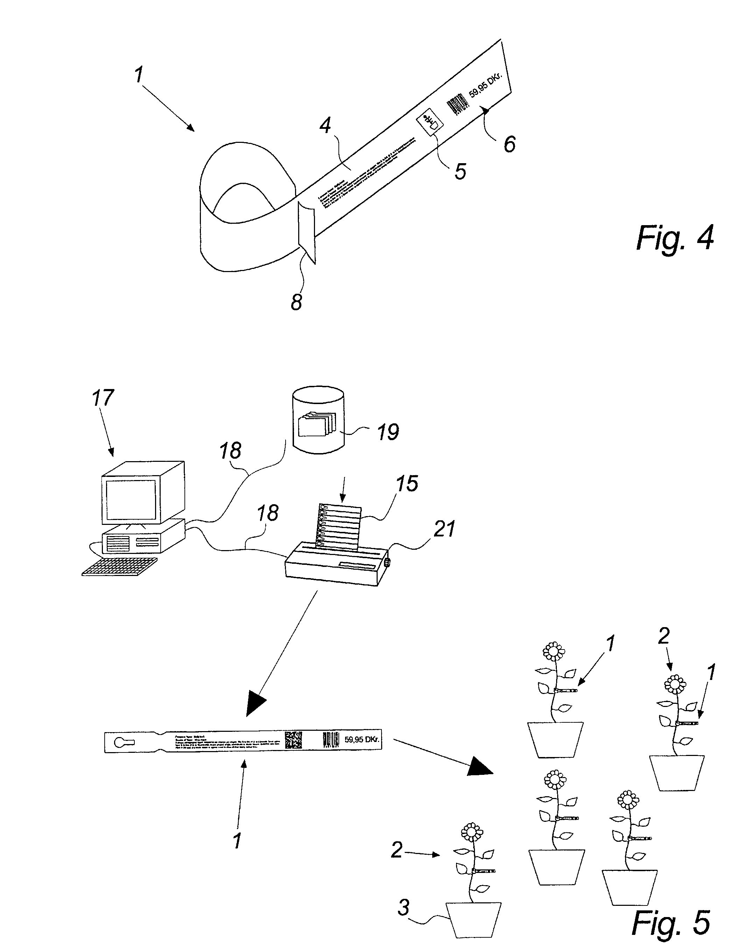

The label (1) further has an opening (7) and a narrowing section (8) placed next to each other in one end. The opposite end of the label may be lead through the opening (7) until the narrowing section (8) is reached where the narrowing section acts as a securing of the label (1) in a position of use (illustrated further in fig. 4).

Fig. 2b illustrates a second embodiment of a label (1) for plants (2) in the shape of a stake (9) which is intended to be placed in the soil next to the plant (2) in question.

Fig. 2c and 2d illustrate a third and fourth embodiment of a label for plants. The embodiments are in forms of a push-on (10) and a hang-on label (11) which both have a hold section (13), (14) with an opening and a split. The split allows the label to be placed on a plant (2) such as a branch.

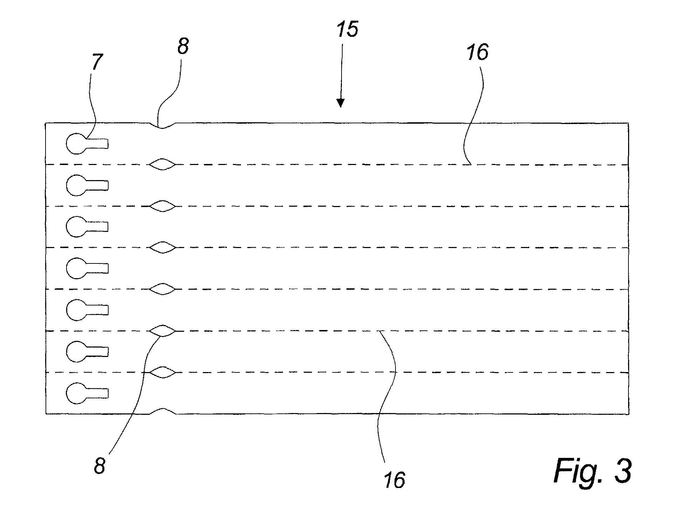

Fig. 3 illustrates a sheet (15) including a number of labels (1) where the sheet is divided by a number of longitudinal tear lines (16). After the necessary information has been printed on the sheet (15), the labels 1 are separated by tearing along the lines (16).

Fig. 4 illustrates the label of fig. 1 in a use position where the label forms a circle to surround a branch or the like of a plant.

Fig. 5 illustrates a system for printing plastic or resin made labels (1) for plants (2) where the system includes a computer (17) with a connection (20) to a printer (21) and a connection (18) to at least one database (19). The printer (21) may be a colour printer such as a laser or ink jet printer. The database (19) may be positioned on the harddrive of the computer or in another place where the connection between the computer and the database may be the Internet.

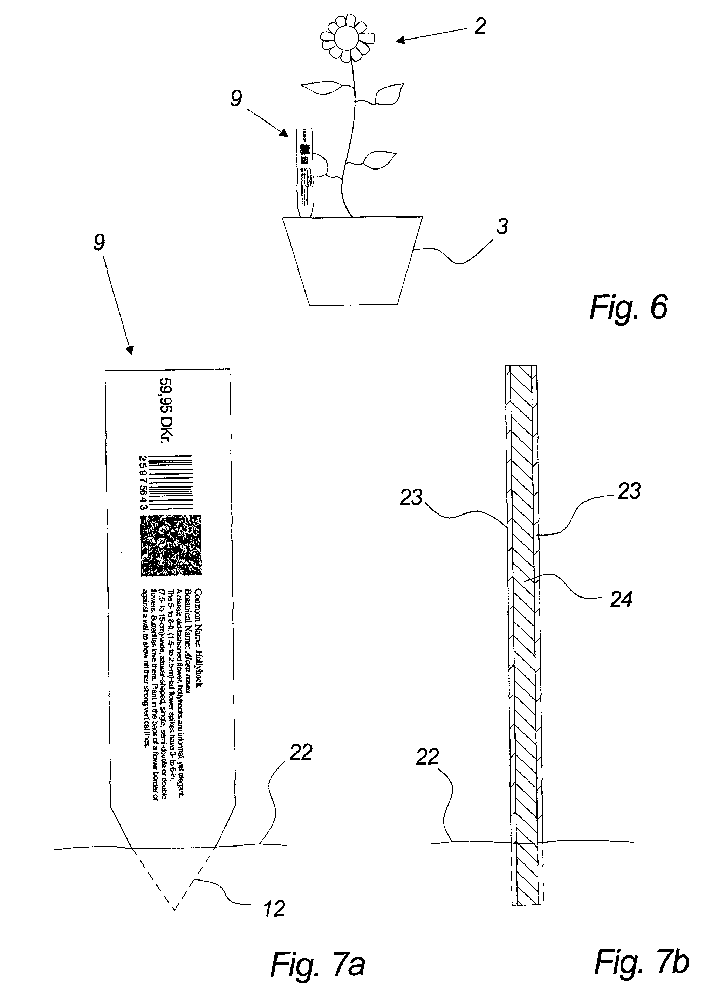

Fig. 6 illustrates the use of a stake label (9) in the soil of a potted plant where the stake label is partly stuck into the soil next to the plant (2).

Figs. 7a and 7b illustrate the structure and use of a stake label according to a preferred embodiment of the invention.

Fig. 7a illustrates how a sharp end (12) of the stake label (9) is stuck into the soil. The rest of the stake includes areas for information printing such as a text area (4), an image area (5) and an identification and price area (6).

Fig. 7b illustrates an embodiment of a stake label (9) seen in a side view. The stake has microporous surfaces (23) surrounding a central material (24) with a more rigid structure than the surface material (23).

Preferably, each of the microporous surfaces (23) has a thickness between (100) and (150) micrometer and the central material (24) has a thickness between (200) and (300) micrometer to ensure high printing quality and a rigid structure.

However, the stake may also have just one microporous surface (23) placed on one side of the central material (24) e.g. if it is not necessary to print on both sides. In this situation the microporous surface (23) should have a thickness between (200) and (300) micrometer.

### List

- 1.: First embodiment of a label for plants
- 2.: Plant
- 3.: Container for plants such as a pot with soil
- 4.: Text area such as plant information
- 5.: Image area such as an image of a plant
- 6.: Identification code and price area e.g. a bar code and price area
- 7.: Opening in the label
- 8.: Narrowing section of the label
- 9, 10, 11.: Further embodiments of labels such as stake, push-on and hang-on labels, respectively
- 12.: Sharp end of a stake
- 13.: Hold section of a push-on label
- 14.: Hold section of a hang-on label
- 15.: Sheet of labels
- 16.: Longitudinal tear line
- 17.: Computer
- 18.: Connection
- 19.: Database
- 20.: Connection
- 21.: Printer
- 22.: Soil
- 23.: Sides including at least one porous surface
- 24.: Material with a rigid structure

## Claims

1. Label (1) for plants (2) comprising
a plastic or resin material,
at least one section with a surface suitable for printing (4, 5, 6), and
at least one section with means for holding (7, 8, 13, 14) the label to said plant,
**characterised in that**
said surface includes a microporous structure with an average diameter of the pores in said microporous structure ranging between 0.01 to 1 micrometers.

2. Label (1) for plants (2) according to claim 1 **characterised in that** said surface comprises a thermoplastic polymer with a softening temperature between 50 and 200 degrees and preferably above 65 degrees.

3. Label (1) for plants (2) according to claim 1 or 2 **characterised in that** said surface comprises a polyolefin material.

4. Label (1) for plants (2) according to any of the claims 1 to 3 **characterised in that** fibres of said material substantially are directed in one direction and preferably in a longitudinal direction.

5. Label (1) for plants (2) according to any of the claims 1 to 4 **characterised in that** the average diameter of the pores in said microporous structure range preferably between 0.01 and 0.5 micrometers.

6. Label for plants according to any of the claims 1 to 5 **characterised in that** said surface includes a text area (4), an image area (5) and an identification code and/or price area (6).

7. Label for plants according to any of the claims 1 to 6 **characterised in that** at least one side (23) comprising a porous surface is coated on a further material (24) with a more rigid structure than said surface.

8. System for printing on plastic or resin made labels (1) for plants (2) according to claim 1, said system comprising
a computer (17) and a printer (21) connected to said computer,
a sheet of labels (15) with at least one surface suitable for printing (4, 5, 6),
**characterised in that**
said labels comprise at least one surface of a microporous structure and where printing on said surface is performed as part of a single process.

9. System for printing on plastic or resin made labels (1) for plants (2) according to claim 8 **characterised in that** that said label comprises a polyolefin material and said printer (21) is a laser printer and preferably a colour or an LED printer.

10. System for printing labels for plants according to claim 8 or 9 **characterised in that** said computer further comprises a connection to a database comprising pre-stored information such as text regarding plants, images of plants and identification codes and/or prices and said connection may be an Internet connection.

11. Method for printing information on plastic or resin made labels for plants according to claim 1, said method comprising the following steps:
printing text on said text area,
printing one or more images on said image area, and
printing an identification code and/or price on said identification code and/or price area
**characterised in that**
said different printing steps are performed as part of a single process.

12. Method for printing information on labels for plants according to claim 11 **characterised in that** said text, images and identification codes and/or prices are loaded from a database with the use of a data connection such as an Internet connection.

## Patentansprüche

1. Etikett (1) für Pflanzen (2), umfassend
einen Kunststoff- oder Harzfilmwerkstoff,
mindestens einen Abschnitt mit einer zum Bedrucken geeigneten Oberfläche (4, 5, 6) und
mindestens einen Abschnitt zum Befestigen (7, 8, 13, 14) des Etikettes an der Pflanze,
**dadurch gekennzeichnet,dass**
die Oberfläche eine Mikroporenstruktur mit einem durchschnittlichen Porendurchmesser in der Mikroporenstruktur, der sich zwischen 0,01 bis 1 Mikrometer bewegt, umfasst.

2. Etikett (1) für Pflanzen (2) nach Anspruch 1, **dadurch gekennzeichnet, dass** die Oberfläche ein thermoplastisches Polymer mit einer Erweichungstemperatur zwischen 50 und 200 Grad und vorzugsweise über 65 Grad umfasst.

3. Etikett (1) für Pflanzen (2) nach Anspruch 1 oder 2, **dadurch gekennzeichnet, dass** die Oberfläche einen Polyolefinwerkstoff umfasst.

4. Etikett (1) für Pflanzen (2) nach einem der Ansprüche 1 bis 3, **dadurch gekennzeichnet, dass** die Fasern des Werkstoffes im Wesentlichen in eine Richtung und vorzugsweise in eine Längsrichtung ausgerichtet sind.

5. Etikett (1) für Pflanzen (2) nach einem der Ansprüche 1 bis 4, **dadurch gekennzeichnet, dass** sich der durchschnittliche Porendurchmesser in der Mikroporenstruktur vorzugsweise zwischen 0,01 und 0,5 Mikrometer bewegt.

6. Etikett für Pflanzen nach einem der Ansprüche 1 bis 5, **dadurch gekennzeichnet, dass** die Oberfläche einen Textbereich (4), einen Bildbereich (5) und einen Identifikationscode- und/oder Preisbereich (6) umfasst.

7. Etikett für Pflanzen nach einem der Ansprüche 1 bis 6, **dadurch gekennzeichnet, dass** mindestens eine Seite (23), die eine porige Oberfläche umfasst, auf einen weiteren Werkstoff (24) mit einer steiferen Struktur als die der besagten Oberfläche beschichtet ist.

8. System zum Bedrucken von aus Kunststoff oder Harzfilm hergestellten Etiketten (1) für Pflanzen (2) nach Anspruch 1, umfassend
einen Computer (17) und einen mit dem Computer verbunden Drucker (21), einen Etikettenbogen (15) mit mindestens einer zum Bedrucken geeigneten Oberfläche (4, 5, 6),
**dadurch gekennzeichnet, dass**
die Etiketten mindestens eine Oberfläche aus einer Mikroporenstruktur umfassen, und wobei das Bedrucken von der Oberfläche als Teil eines Einzelprozesses durchgeführt wird.

9. System zum Bedrucken von aus Kunststoff oder Harzfilm hergestellten Etiketten (1) für Pflanzen (2) nach Anspruch 8, **dadurch gekennzeichnet, dass** das Etikett einen Polyolefinwerkstoff umfasst und der Drucker (21) ein Laserdrucker und vorzugsweise ein Farb- oder ein LED-Drucker ist.

10. System zum Bedrucken von Etiketten für Pflanzen nach Anspruch 8 oder 9,
**dadurch gekennzeichnet, dass** der Computer des Weiteren eine Verbindung zu einer Datenbank umfasst, die vorgespeicherte Informationen, wie zum Beispiel Pflanzen betreffenden Text, Bilder von Pflanzen und Identifikationscodes und/oder Preise umfasst, und die Verbindung eine Internetverbindung sein kann.

11. Verfahren zum Drucken von Informationen auf aus Kunststoff oder Harzfilm hergestellten Etiketten für Pflanzen nach Anspruch 1, wobei das Verfahren die folgenden Schritte umfasst:
Drucken des Textes auf den Textbereich,
Drucken eines oder mehrerer Bilder auf den Bildbereich und
Drucken eines Identifikationscodes und/oder Preises auf den Identifikationscode- und/oder Preisbereich,
**dadurch gekennzeichnet, dass** die unterschiedlichen Druckschritte als Teil eines Einzelprozesses durchgeführt werden.

12. Verfahren zum Drucken von Informationen auf Etiketten für Pflanzen nach Anspruch 11, **dadurch gekennzeichnet, dass** der Text, die Bilder und die Identifikationscodes und/oder Preise von einer Datenbank mittels einer Datenverbindung, wie zum Beispiel einer Internetverbindung, geladen werden.

## Revendications

1. Etiquette (1) pour plantes (2) comprenant :
une matière plastique ou résineuse,
au moins une partie avec une surface appropriée à l'impression (4, 5, 6), et
au moins une partie avec des moyens (7, 8, 13, 14) pour maintenir l'étiquette à ladite plante,
**caractérisée en ce que**
ladite surface comprend une structure microporeuse avec un diamètre moyen des pores dans ladite structure microporeuse compris entre 0,01 et 1 micromètre.

2. Etiquette (1) pour plantes (2) selon la revendication 1, **caractérisée en ce que** ladite surface comprend un polymère thermoplastique avec une température de ramollissement comprise entre 50 et 200 degrés et de préférence supérieure à 65 degrés.

3. Etiquette (1) pour plantes (2) selon la revendication 1 ou 2, **caractérisée en ce que** ladite surface comprend une matière polyoléfinique.

4. Etiquette (1) pour plantes (2) selon l'une quelconque des revendications 1 à 3, **caractérisée en ce que** les fibres de ladite matière sont essentiellement dirigées dans une direction et de préférence dans une direction longitudinale.

5. Etiquette (1) pour plantes (2) selon l'une quelconque des revendications 1 à 4, **caractérisée en ce que** le diamètre moyen des pores dans ladite structure microporeuse est compris de préférence entre 0,01 et 0,5 micromètre.

6. Etiquette pour plantes selon l'une quelconque des revendications 1 à 5, **caractérisée en ce que** ladite surface comprend une zone de texte (4), une zone d'image (5) et une zone de code d'identification et/ou de prix (6).

7. Etiquette pour plantes selon l'une quelconque des revendications 1 à 6, **caractérisée en ce qu'**au moins un côté (23) comprenant une surface poreuse est déposé sur une autre matière (24) avec une structure plus rigide que ladite surface.

8. Système pour l'impression sur des étiquettes en plastique ou en résine (1) pour plantes (2) selon la revendication 1, ledit système comprenant :
un ordinateur (17) et une imprimante (21) connectée audit ordinateur,
une feuille d'étiquettes (15) avec au moins une surface appropriée à l'impression (4, 5, 6),
**caractérisé en ce que**
lesdites étiquettes comprennent au moins une surface d'une structure microporeuse et où l'impression sur ladite surface est réalisée comme partie d'un procédé unique.

9. Système pour l'impression sur des étiquettes en plastique ou en résine (1) pour plantes (2) selon la revendication 8, **caractérisé en ce que** ladite étiquette comprend une matière polyoléfinique et ladite imprimante (21) est une imprimante laser et de préférence une imprimante couleur ou LED.

10. Système pour l'impression d'étiquettes pour plantes selon la revendication 8 ou 9, **caractérisé en ce que** ledit ordinateur comprend en outre une connexion à une base de données comprenant des informations pré-stockées telles que le texte concernant les plantes, les images des plantes et les codes d'identification et/ou les prix, et ladite connexion peut être une connexion Internet.

11. Procédé pour l'impression d'informations sur des étiquettes en plastique ou en résine pour plantes selon la revendication 1, ledit procédé comprenant les étapes suivantes:
l'impression du texte sur ladite zone de texte,
l'impression d'une ou plusieurs images sur ladite zone d'image, et
l'impression d'un code d'identification et/ou d'un prix sur ladite zone de code d'identification et/ou de prix,
**caractérisé en ce que**
lesdites différentes étapes d'impression sont réalisées comme partie d'un procédé unique.

12. Procédé pour l'impression d'informations sur des étiquettes pour plantes selon la revendication 11, **caractérisé en ce que** lesdits texte, images et codes d'identification et/ou prix sont chargés à partir d'une base de données avec l'utilisation d'une connexion aux données telle qu'une connexion Internet.
